# EUROPÄISCHE PATENTSCHRIFT

(11) **EP 0 467 320 B1**
(45) Veröffentlichungstag und Bekanntmachung des Hinweises auf die Patenterteilung: **16.10.1996**
(21) Anmeldenummer: 91111923.8
(22) Anmeldetag: 17.07.1991
(51) Int. Cl.: H01B 3/30, C08G 18/08, C03C 25/02, B29B 15/12, B05C 5/02

(54) **Verfahren zur Herstellung von Überzügen auf Drähten**
Method of making coatings for wires
Procédé de réalisation de revêtements de fils

(30) Priorität: 20.07.1990 DE 4023061
(43) Veröffentlichungstag der Anmeldung: 22.01.1992
(73) Patentinhaber: Herberts Gesellschaft mit beschränkter Haftung, 42285 Wuppertal (DE)
(72) Erfinder: Winkler, Diethard, W-5600 Wuppertal 2 (DE); Krause, Rainer, W-5600 Wuppertal 1 (DE); Gläser, Achim, W-5600 Wuppertal 2 (DE)
(74) Vertreter: Türk, Gille, Hrabal, Leifert

(56) Entgegenhaltungen:
- EP-A- 0 111 122
- EP-A- 0 287 192
- DE-A- 2 524 351
- FR-A- 2 181 998
- FR-A- 2 319 595
- US-A- 4 867 775

## Beschreibung

Die Erfindung betrifft die Herstellung von lötfähigen isolierenden Überzügen auf elektrisch leitfähigen Drähten.

Die Verwendung von Polyurethanlacken zur elektrischen Isolierung von Kupfer-Wickeldrähten ist bekannt. Dieser Drahtlack-Typ kommt in großem Umfang für die Herstellung leicht verzinnbarer und somit lötbarer Lackdrähte für die Elektroindustrie zum Einsatz.

Aus der DE-A- 728 981 ist die Herstellung von Polyurethanen aus hydroxylgruppenhaltigen Polymeren und Polyisocyanaten allgemein bekannt. Die DE-A- 756 058 beschreibt die Herstellung von Überzügen, unter anderem auch auf Drähten, durch Führen der Drähte durch ein Lösungsmittel enthaltendes Bad eines Lackes auf Basis von hydroxylgruppenhaltigen Polymeren und Polyisocyanaten. In der Praxis erwiesen sich die Bäder sowie das Verfahren als ungeeignet, da nur unterschiedliche Schichtdicken der Lacküberzüge zu erhalten waren. Aus diesem Grund wurden verkappte Polyisocyanate entwickelt, die diesen Nachteil nicht aufweisen sollten (O. Bayer: Neuere Entwicklungen des Diisocyanat-Polyadditions-Verfahrens / FATIPEC 1957, S. 14 und 15 sowie Houben-Weyl, 1962, Bd. 14/2, S. 78 und BAYER-Produkte für die Elektroisolierung, Punkt 1.1/2 bis 1.1/3, Stand 1987).

In der Praxis werden für die Herstellung von Lackdrähten nach wie vor Kombinationen von hydroxylgruppenhaltigen Polymeren wie z.B. Polyesterharzen mit phenolblockierten Polyisocyanaten in gemeinsamer Lösung verwendet. Die Verkappung der Polyisocyanatkomponente bewirkt einen Schutz vor vorzeitiger Gelierung des Lacks und ermöglicht eine ausreichende Lagerfähigkeit dieser Einkomponentenlacke. Ein typisches Beispiel für die phenolverkappten Polyisocyanate ist das Additionsprodukt aus Trimethylolpropan, Diisocyanatotoluol und Phenol (Desmodur AP®), wie es in Houben-Weyl, 1962, Bd. 14/2, S. 67 beschrieben ist. Typische Lösungsmittel für diese Lacke sind technische Kresole im Gemisch mit aromatischen Kohlenwasserstoffen. Die Lacke besitzen in der Regel einen Feststoffgehalt von etwa 25 - 35 %.

Die Herstellung der Lackdrähte erfolgt üblicherweise durch mehrfaches kontinuierliches Auftragen des Drahtlacks auf den Metalldraht mittels Filz- oder Düsenabstreifung. Nach jedem Auftrag wird der Lack bei Temperaturen zwischen 300 und 500^{o}C ausgehärtet. Das phenolische Verkappungsmittel spaltet beim Vernetzungsprozeß ab und entweicht aus dem Lackfilm. Temperatur und Verweilzeit im Drahtlackierofen sind abhängig vom Drahtdurchmesser und den konstruktiven Gegebenheiten des Ofens.

Die Verwendung phenolischer Lösungs- und Verkappungsmittel ist mit Nachteilen verbunden. Die Formulierung vollkommen kresolfreier, umweltfreundlicher Polyurethan-Drahtlacke ist nicht möglich, da auch bei kresolfreier Lösung während der Härtung das phenolische Verkappungsmittel freigesetzt wird. Für die Abspaltung der Verkappungsmittel muß beim Härtungsprozeß zusätzliche Energie aufgewendet werden.

Die zur Filmbildung erforderliche hohe Temperatur von 300 bis 500 ^{o}C im Drahtlackierofen kann bereits zu pyrolytischen Abbaureaktionen während des Einbrennprozesses unter Abspaltung von Isocyanaten und Aminen führen.

Verschiedene Versuche, kresolfreie Drahtlacke auf Basis anderer Verkappungsmittel als Phenol/Kresol herzustellen, zeigen die DE-A- 2 404 740, 2 545 912, 2 626 175, 2 632 037 und 2 840 352 auf. Diese Verfahren besitzen technologische Nachteile und konnten sich nicht durchsetzen.

Verwendet man alkoholische Blockierungsmittel, wie sie z.B. in der DE-A-26 26 175 beschrieben werden, so wird die Entkappungstemperatur noch weiter angehoben und die Gefahr der thermischen Schädigung während der Aushärtung erhöht.

Die DE-A- 25 45 912 beschreibt die Verwendung von lactamverkappten Polyisocyanaten. Das beim Einbrennvorgang abgespaltene Caprolactam kondensiert in den kühleren Abluftkanälen des Drahtlackierofens und muß von dort mechanisch entfernt werden. Die erreichbaren Lackiergeschwindigkeiten sind gegenüber den phenolverkappten Isocyanaten reduziert.

Die DE-A- 20 22 802 der Anmelderin beschreibt ein Verfahren zur Herstellung einer Kunststoffumhüllung für Metalldrähte. Dazu wird ein Folienschlauch aus duroplastisch härtbarem Kunststoff auf einen Hohldorn ausgespritzt, wobei der elektrische Leiter mit einer höheren Abzugsgeschwindigkeit abgezogen wird. Bei flüssig vorliegenden Harzen werden diese ganz oder teilweise vorreagiert, um am Spritzkopf die notwendige Viskosität zu erhalten. Als vernetzbare Kunststoffe dieser Art werden u.a. auch Reaktionsprodukte aus Polyisocyanaten und Hydroxylpolyestern erwähnt. Die hohe Viskosität bewirkt jedoch vor allem bei Feindrähten durch hohe Zugkräfte eine unerwünschte Dehnung des Drahtes bis hin zu Drahtrissen.

Aufgabe der Erfindung ist die Bereitstellung eines Verfahrens zur Herstellung von Überzügen auf bzw. zur Lackierung von Drähten das zu gleichmäßigen Lacküberzügen führt und frei von der Gefahr von schädlichen Spaltprodukt- oder starken Lösemittelemissionen durchgeführt werden kann. Das Verfahren soll zu lötbaren isolierten leitfähigen Drähten, wie Kupferdrähten, führen. Es sollen auch Lacke für das Verfahren, bereitgestellt werden.

Es hat sich gezeigt, daß diese Aufgabe durch eine Zweikomponenten-Technik (2K-Technik) gelöst werden kann, wie sie bisher für die Lackierung von Drähten nicht bekannt war.

Die Erfindung betrifft daher ein Verfahren zur Herstellung von lötfähigen, isolierenden Überzügen auf elektrisch leitfähigen Drähten durch Beschichten bzw. Lackieren mit flüssigen Mischungen aus hydroxylgruppenhaltigen Polymeren und Polyisocyanaten und anschließendes Aushärten, das dadurch gekennzeichnet ist, daß man
A) ein oder mehrere hydroxylgruppenhaltige Polymere mit einem Zahlenmittel des Molekulargewichts von 250 bis 1000, einer Hydroxylzahl von 130 bis 750 und einer Säurezahl von 0 bis 150, im flüssigen Zustand mit
B) einem oder mehreren Polyisocyanaten mit mindestens zwei freien Isocyanatgruppen und einem Zahlenmittel des Molekulargewichts von 200 bis 2000, bevorzugt 200 bis 900, im flüssigen Zustand,

kontinuierlich unmittelbar vor dem Aufbringen auf den Draht oder das faserartige Material in einem derartigen Verhältnis vermischt, daß auf jede Hydroxyl- und Carboxylgruppe 0,5 bis 1,5 Isocyanatgruppen entfallen, wobei die Komponenten A und/oder B Katalysatoren und/oder lackübliche Additive enthalten können, und daß man diese Mischung kontinuierlich jedem einzelnen in kontinuierlicher Fortbewegung befindlichen Draht in einer dem unmittelbaren Verbrauch entsprechenden Menge zuführt.

Der unmittelbare Verbrauch ergibt sich beim erfindungsgemäßen Verfahren aus der Fortbewegungsgeschwindigkeit des Drahtes und der gewünschten Schichtdicke der Lackierung.

Der flüssige Zustand der Komponenten A und B, die beim erfindungsgemäßen Verfahren unmittelbar vor dem Auftrag vermischt werden, kann auf verschiedene Weise erzielt werden:
**(a)** es können bei Applikationstemperatur, z.B. Raumtemperatur, flüssige Polymere bzw. Polyisocyanate eingesetzt werden.
**(b)** die Komponenten A und/oder B können erwärmt werden, bis der gewünschte flüssige Zustand, d.h. die gewünschte Applikationsviskosität, erzielt werden,
**(c)** der Komponente A und/oder der Komponente B können geringe Mengen an Lösemittel zugesetzt werden, wobei zur Erzielung des flüssigen Zustandes gegebenenfalls erwärmt werden kann.

Beim erfindungsgemäßen Verfahren wird das Gemisch der reaktiven Komponenten A und B unmittelbar nach dem Vermischen dem zu beschichtenden bzw. zu lackierenden Draht in einer derartigen Menge zugeführt, die sofort verbraucht wird. Es hat sich als besonders günstig erwiesen und stellt daher eine bevorzugte Ausführungsform der Erfindung dar, wenn die Mischung durch Kapillarrohre den einzelnen Drähten zugeführt werden. Dies läßt sich beispielsweise dadurch realisieren, daß die zu beschichtenden Drähte durch eine trichterförmige Auftragsvorrichtung geführt werden, an deren Ende sich eine Abstreifvorrichtung befindet, und in die die Mischung jeweils durch ein Kapillarrohr in die weithalsigere Öffnung eingeführt wird. Auf diese Weise läßt sich eine genaue dem durch die Geschwindigkeit des zu beschichtenden Substrats und die Schichtdicke bedingten Verbrauch entsprechende Menge dosieren.

Durch das erfindungsgemäße Verfahren können elektrisch leitfähige Drähte, wie z.B. Kupferdrähte verschiedenen Querschnitts lackiert bzw. mit isolierenden Überzügen versehen werden. Derart lackierte Kupferdrähte sind lötfähig, da sich die Lackschicht beim Eintauchen des Lackdrahts in ein heißes Lötbad zersetzt und somit der Draht gleichzeitig mit Lötzinn überzogen werden kann.

Es hat sich gezeigt, daß das erfindungsgemäße Verfahren gegenüber dem bisherigen Einkomponentenverfahren mit vollverkappten Polyisocyanaten besonders wirtschaftlich und umweltfreundlich ist. Es müssen keine teuren und umweltschädlichen Verkappungsmittel beim Einbrennvorgang abgespalten werden. Lösungsmittel werden nicht oder nur in geringen Anteilen als Verlaufsmittel benötigt. Phenolische Lösungsmittel sind aus Gründen des Umweltschutzes unerwünscht. Die Lackiergeschwindigkeit kann bei gleichen Einbrenntemperaturen gegenüber dem bisher bekannten Verfahren wesentlich erhöht werden. Damit steigert sich gleichzeitig die Wirtschaftlichkeit einer Drahtlackieranlage. Der Lackdraht wird zudem einer geringeren thermischen Belastung unterworfen, was der Qualität des Überzugs zugute kommt.

Das Mischungsverhältnis läßt sich durch Änderung der Zuführungsgeschwindigkeiten der einzelnen Komponenten A und B variieren. Dadurch können auf einfache Weise Lackdrähte mit breitem Eigenschaftsspektrum erzeugt werden. In einer bevorzugten Ausführungsform enthält die hydroxylgruppenhaltige Komponente A außer den Hydroxylgruppen auch Carboxylgruppen. Dadurch lassen sich isolierende Überzüge mit verbesserter thermischer Beständigkeit erzielen. Die Lötzeit verschlechtert sich bei geeignetem Verhältnis von Hydroxyl- zu Carboxylgruppen nur unwesentlich.

Als hydroxyfunktionelle Komponente A mit mittleren Molekulargewichten von 250 - 1000, Hydroxylzahlen von 130 - 750 und Säurezahlen von 0 - 150 kommen beispielsweise in Betracht:
- Polyesterharze, die aus Polycarbonsäuren und Polyolen nach bekannten Verfahren hergestellt werden,
- Polyetherpolyole; z.B. die Umsetzungsprodukte von Diolen und/oder Triolen mit Ethylenoxid und/oder Propylenoxid,
- hydroxyfunktionelle Urethane aus Polyisocyanaten und einem Überschuß an Polyalkoholen,
oder Mischungen daraus. Werden Mischungen verschiedener Verbindungen verwendet, so gilt die Definition von mittlerem Molekulargewicht, Hydroxylzahl und Säurezahl für die gesamte Mischung. Die hydroxyfunktionelle Komponente A muß mindestens zwei Hydroxylgruppen pro Molekül enthalten. Wird die Komponente B aus der Gruppe der Diisocyanate ausgewählt, ist es günstig, wenn die Komponente A mindestens teilweise tri- oder höherfunktionell ist.

Bevorzugt werden Polyesterharze, die nach bekannten Verfahren aus Polyalkoholen und Polycarbonsäuren hergestellt werden. Die Herstellungsmethoden dieser Polyesterharze sind z.B. in Houben-Weyl, 4. Aufl., 1963, Bd. 14/2, S. 1-41 beschrieben. Durch geeignete Auswahl der Rohstoffe lassen sich die Eigenschaften in weiten Grenzen variieren.

Die Carboxylgruppen können eingebracht werden, indem die Veresterungsreaktion mit Polycarbonsäuren bei der gewünschten Säurezahl abgebrochen wird. Eine weitere Möglichkeit ist die Zugabe von Carbonsäureanhydridverbindungen zu weitgehend carboxylgruppenfreien Polyesterharzen. Bei Reaktionstemperaturen von ca. 50 bis 150^{o}C bilden sich die sauren Halbester. Geeignete Anhydridverbindungen sind z.B. Trimellithsäureanhydrid, Phthalsäureanhydrid, Maleinsäureanhydrid oder Bernsteinsäureanhydrid.

Beispiele für Polyole sind Ethylenglykol, Propandiol-(1,2) und -(1,3), Butandiol-(1,4) und -(1,3), Pentandiol-(1,5), Hexandiol-(1,6), Neopentylglykol, 1,4-Bis-hydroxymethyl-cyclohexan, -cyclohexan, Diethylenglykol, Triethylenglykol, höhermolekulare Ether des Ethylenglykols oder Propylenglykols, Glycerin, Trimethylolethan, Trimethylolpropan, Tris-(hydroxyethyl)-isocyanurat.

Anstelle der Polyole können auch ganz oder teilweise niedermolekulare Verbindungen eingesetzt werden, die Epoxydringe enthalten und sich mit Carbonsäuren zu Estern umsetzen.

Da sekundäre Hydroxylgruppen bei der Veresterungsreaktion sowie der Isocyanataddition langsamer reagieren als primäre Hydroxylgruppen, kann durch geeignete Auswahl der Polyole die Reaktivität gesteuert werden. Vor allem bei Polyesterharzen mit Hydroxylzahlen über ca. 300 bzw. Molekulargewichten über ca. 450 ist es oft vorteilhaft, einen Teil der Hydroxylgruppen in Form von sekundären Hydroxylgruppen einzuführen. Dies kann z.B. über Propandiol-(1,2) oder Glycerin geschehen. Überraschenderweise werden dadurch kürzere Lötzeiten erzielt.

Als Polycarbonsäuren kommen auch solche Verbindungen in Betracht, die unter den Reaktionsbedingungen wie Carbonsäuren einkondensiert werden, wie z.B. ihre Anhydride und Ester.

Beispiele sind Phthalsäureanhydrid (PSA), Isophthalsäure (IPS), Terephthalsäuredimethylester (DMT), Bernsteinsäure, Maleinsäureanhydrid (MSA), Adipinsäure, Sebazinsäure, Azelainsäure, Tetrahydrophthalsäureanhydrid (THPSA), Hexahydrophthalsäureanhydrid, Trimellithsäure (TMS), Trimellithsäureanhydrid (TMA), Butantetracarbonsäure oder Pentantetracarbonsäure.

In Betracht kommen ebenfalls Dicarbonsäuren und Hydroxycarbonsäuren, die fünfgliedrige Imidringe enthalten. Derartige Verbindungen können nach bekannten Verfahren z.B. aus cyclischen Carbonsäureanhydriden, die neben der cyclischen Anhydridgruppe noch mindestens eine weitere Anhydrid- oder Carboxylgruppe enthalten, durch Umsetzung mit Aminocarbonsäuren, aliphatischen oder aromatischen Diaminen oder Lactamen hergestellt werden. Beispiele sind: 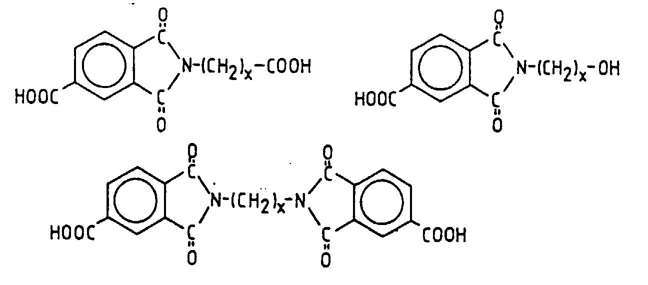 Weiterhin können die Polyesterharze auch Amidgruppen enthalten, z.B. durch Einkondensation von Diaminen, Aminoalkoholen oder cyclischen Amiden wie Caprolactam. Anstelle der Polycarbonsäuren und Polyalkohole können auch Hydroxycarbonsäuren oder cyclische Lactone verwendet werden.

Die Mengenverhältnisse der Polycarbonsäuren und Polyalkohole werden derart gewählt, daß Polyesterharze mit mittleren Molekulargewichten von 250 bis 1000, Säurezahlen von 0 bis 150 und Hydroxylzahlen von 130 bis 750 erhalten werden. Bevorzugt werden Kondensationsprodukte mit mittleren Molekulargewichten von 300 bis 500, Säurezahlen von 5 bis 80 und Hydroxylzahlen von 200 bis 450. Besonders bevorzugt werden Polyesterharze mit Säurezahlen von 10 bis 30.

Als Polyetherpolyole eignen sich Umsetzungsprodukte von Diolen und Triolen mit Ethylenoxid und Propylenoxid, wie sie z.B. in Houben-Weyl, 4. Aufl.; 1963, Bd. 14/2, S. 436 bis 450 beschrieben sind. Carboxylgruppen können durch Umsetzung mit Anhydridverbindungen eingebracht werden.

Aufgrund ihrer niedrigen Viskosität eignen sie sich auch hervorragend zur Kombination mit Polyesterharzen. In diesem Fall gilt die Definition von mittlerem Molekulargewicht, Säure- und Hydroxylzahl für die gesamte Mischung.

Als hydroxyfunktionelle Urethane kommen Reaktionsprodukte aus Polyalkoholen und Polyisocyanaten in Betracht, wie sie z.B. in Houben-Weyl, 4. Aufl., 1963, Bd. 14/2, S. 71 bis 76, beschrieben sind. Als Polyalkohole eignen sich die zur Herstellung der Polyesterharze beschriebenen Alkohole. Weiterhin kommen Esterpolyole mit mindestens zwei Hydroxylgruppen im Molekül in Betracht. Carboxylgruppen können nach abgeschlossener Umsetzung der Polyalkohole und Polyisocyanate durch Umsetzung mit Polycarbonsäureanhydridverbindungen bei Temperaturen von beispielsweise 20 bis 100°C eingebracht werden.

Die Polyisocyanate zur Herstellung der Urethane können aus der Gruppe ausgewählt werden, die unter der Polyisocyanatkomponente B beschrieben wird. Weiterhin kommen hierzu auch niedermolekulare Polyisocyanate mit Molekulargewichten unter 200 in Betracht, wie 2,4- und 2,6-Toluylendiisocyanat, 1,3- und 1,4-Phenylen-diisocyanat und 1,6-Hexamethylendiisocyanat.

Als Polyisocyanatkomponente der Komponente B mit mindestens zwei freien Isocyanatgruppen kommen aliphatische, cycloaliphatische, araliphatische, aromatische und heterocyclische Polyisocyanate mit Molekulargewichten zwischen 200 und 2000, bevorzugt 200 bis 900, in Betracht, wie z.B. 4,4'-Diisocyanatodiphenyl-methan, 2,4'-Diisocyanatodiphenylmethan, 4,4'-Diisocyanatodiphenylether, 1-Isocyanato-3,3,5-trimethyl-5-isocyanatomethyl-cyclohexan und 2,2,4- und 2,4,4-Trimethyl-hexamethylendiisocyanat.

Weiterhin kommen Polyisocyanate in Betracht, wie sie z.B. in Houben-Weyl, 4. Aufl., 1963, Bd. 14/2, S. 64 bis 70, beschrieben sind:
- Umsetzungsprodukte der Polyisocyanate mit einem Unterschuß an Polyalkoholen,
- Trimerisierungsprodukte der Isocyanate
- carbodiimidhaltige Polyisocyanate
- Umsetzungsprodukte mit Biuretstruktur
- uretdionhaltig Polyisocyanate.

Bevorzugt werden Oligaurethane mit zwei bis vier freien Isocyanatgruppen im Molekül und mittleren Molekulargewichten von 200 bis 2000, bevorzugt bis 900. Für die Herstellung dieser Oligourethane können auch Polyisocyanate mit Molekulargewichten unter 200 verwendet werden. Bevorzugt werden Addukte aromatischer Diisocyanate wie 2,4- und 2,6Toluylendiisocyanat.

Es können auch Mischungen verschiedener Polyisocyanate zur Erzielung bestimmter Eigenschaften verwendet werden.

Wird die Komponente A aus der Gruppe von Verbindungen mit nur zwei funktionellen Gruppen (Hydroxyl- und/oder Carboxylgruppen) gewählt, so ist es günstig, wenn die Komponente B mindestens teilweise tri- oder höherfunktionell ist.

Besonders günstig ist es, wenn die Komponenten A und B beide zumindest teilweise tri- und höherfunktionell sind, damit eine mehrdimensionale Vernetzung erfolgen kann. Es ist günstig, wenn beispielsweise mindestens 20 bis 30 Mol% der Summe der Komponenten A und B tri- oder höherfunktionell sind. Im Prinzip können bis zu 100 Mol% tri- oder höherfunktionell sein, wobei sich optimale Werte durch Versuche ermitteln lassen und bei 50 bis 100 Mol% liegen können. Das Verhältnis der Summe von Hydroxyl- und Carboxylgruppen zu Isocyanatgruppen liegt im Bereich von 1:0,5 bis 1:1,5; d.h. es kann sowohl ein Unterschuß als auch ein Überschuß von Isocyanatgruppen vorhanden sein. Bevorzugt wird ein Bereich von 1:0,9 bis 1:1,3.

Die Lackmischung kann zusätzlich Katalysatoren und/oder andere lackübliche Additive, z.B. verlaufsfördernde Mittel, Stabilisatoren zur Regelung der Gelzeit und Kombinationsharze wie Phenolharze, Melaminharze, Epoxydharze enthalten. Derartige Zusätze sind bevorzugt der Komponente A beigemischt.

Die Vernetzungsgeschwindigkeit kann durch Zugabe der bekannten Katalysatoren für die Polyurethanreaktion gesteigert werden. Dadurch wird eine weitere Reduzierung der Ofentemperatur bzw. Erhöhung der Lackiergeschwindigkeit ermöglicht.

Geeignete Katalysatoren sind z.B.
- quaternäre Ammoniumsalze mit Mannich-Basen wie 2-(Trimethylammoniummethyl)-cyclohexanonchlorid,
- tertiäre Ammoniumsalze organischer Säuren wie Triethylammoniumtrichloracetat, Bis-trimethylammonium-oxalat, N-Ethylmorpholinium-acetat,
- organische Metallverbindungen des Bleis, Zinns und Zinks, wie Tetraphenylblei, Tetraethylblei, Hexaphenyldizinn, Hexa-n-butyldizinn, Zinkoctoat,
- Umsetzungsprodukte von Anilin und seinen Derivaten mit Aldehyden wie Acetaldehyd, Propionaldehyd oder Butyraldehyd.

Als Katalysatoren werden vor allem die bekannten sogenannten latenten Katalysatoren bevorzugt, die erst ab bestimmten Temperaturen freigesetzt und dann wirksam werden.

Die Katalysatoren werden in der Regel in einer Menge von 0 bis 5 Gew.%, z.B. 0,1 bis 5 Gew.%, vorzugsweise 0,3 bis 1 Gew.%, bezogen auf die Gesamtmenge der Komponenten A und B eingesetzt.

Beide Komponenten A und B können in lösungsmitelhaltiger oder in lösungsmittelfreier Form vorliegen. Werden Lösungsmittel verwendet, so dürfen sie keine isocyanatreaktiven Gruppen enthalten. Die Lösungsmittel dienen vor allem der Verlaufsverbesserung und sollen Siedepunkte zwischen 100 und 220°C, bevorzugt 140 bis 200°C, besitzen. Die Konzentration wird möglichst gering gehalten und kann beim Verarbeiten in der Wärme bei Temperaturen bis ca. 50°C besonders klein gehalten werden. In der Regel sind maximal 40 Gew.%, bevorzugt bis zu 30 Gew.% und besonders bevorzugt bis zu 10 Gew.% Lösungsmittel, bezogen auf das gesamte Überzugsmittel, ausreichend. Die erfindungsgemäß eingesetzten Überzugsmittel zeichnen sich somit gegenüber den bisher verwendeten Drahtlacken durch einen niedrigen Lösungsmittelgehalt aus.

Als Lösungsmittel, die auch als Verlaufsmittel dienen können, kommen beispielsweise in Betracht:
- Glykolester wie Methoxypropylacetat, Ethoxypropylacetat, Butylglykolacetat, Propylenglykoldiacetat,
- Glykolether wie Dimethyldiglykolether, Methylglykol-tert.-butyl-ether, Ethylglykol-tert.-butylether, Butylglykol-tert.-butyl-ether, Methyldiglykol-tert.-butylether,
- aromatische Kohlenwasserstoffe wie Toluol, Xylol, Solvesso 100®, Solvesso 150® (Solvesso = aromatische Kohlenwasserstoffgemische),
- Ketone wie Cyclohexanon, Methylisobutylketon, Methylisoamylketon,
- sowie Gemische davon.

Weitere Lackadditive, wie Entschäumer, Mittel zur Beeinflussung der Oberflächenspannung etc., können beispielsweise in Mengen von 0 bis 10 Gew.%, bezogen auf das gesamte Überzugsmittel, zugesetzt werden.

Jede der beiden Komponenten A und B ist in einem geschlossenen Behälter für sich lagerfähig. Direkt nach der Mischung beginnt unter Viskositätsanstieg die Vernetzungsreaktion, die bei den erfindungsgemäß einzusetzenden Lackmischungen in ca. ein bis zu mehreren Stunden zur Gelierung führt. Wegen dieser stetigen Viskositätsänderung sind die üblichen Drahtlackiervorrichtungen, die die fertige Lackmischung aus einem Vorratsbehälter über rotierende Walzen und Düsen oder Filzabstreifer auf den Draht bringen, für die erfindungsgemäß einzusetzenden Lackzubereitungen ungeeignet.

Bei dem erfindungsgemäßen Verfahren erfolgt daher die Mischung beider Komponenten kontinuierlich und unmittelbar vor dem Aufbringen auf den elektrischen Leiter. Jedem einzelnen Draht wird dabei in einer Zeiteinheit nur die Lackmenge zugeführt, die auch verbraucht wird.

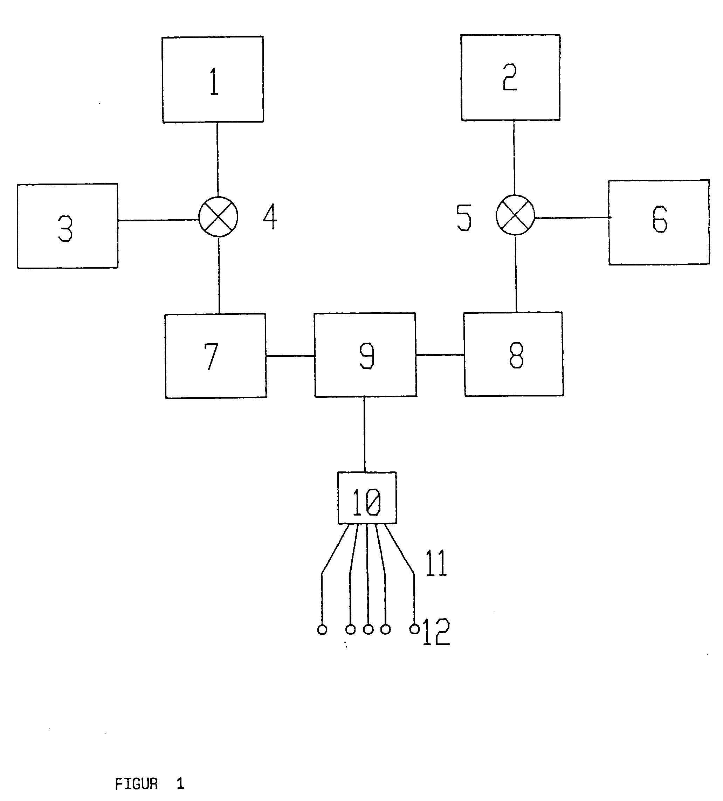

Ein geeignetes Auftragssystem ist z.B. in Figur 1 dargestellt. In der Figur D bedeutet 1 den Vorratsbehälter für die Komponente A, 2 den Vorratsbehälter für die Komponente B, 3 und 6 Vorratsbehälter für Spülverdünnungen, 4 und 5 Hähne, bzw. Absperrhähne, wie z.B. Dreiwege-Hähne, 7 und 8 Pumpen, 9 eine Mischvorrichtung, 10 einen Lackverteiler, 11 Transportleitungen in Form von Kapillaren oder kapillarartigen Bohrungen und 12 die Auftragsvorrichtung.

Die beispielsweise verwendbare Vorrichtung besteht im wesentlichen aus drei Teilen, nämlich der Mischvorrichtung, einem Lackverteiler sowie Transportleitungen, die von dem Lackverteiler zur jeweiligen Auftragsvorrichtung führen. In der als Beispiel angegebenen Ausführungsform der Figur 1 sind die Mischvorrichtung durch 9, der Lackverteiler durch 10, die Transportleitungen durch 11 und die Auftragsvorrichtung durch 12 angegeben.

Mit einer solchen Vorrichtung lassen sich die Komponenten A und B kontinuierlich unmittelbar vor dem Aufbringen auf den Draht in definierten Verhältnissen mischen. Die Lackmischung wird jeder Auftragsvorrichtung gesondert und in einer dem Verbrauch genau entsprechenden Menge zugeführt. Der Transportweg von der Mischvorrichtung zur Auftragsvorrichtung wird dabei kurz gehalten.

Zur Herstellung der Lackmischung eignen sich handelsübliche Zweikomponenten-Verarbeitungsanlagen, z.B. Eldo-Mix der Firma Hilger + Kern. Die Komponenten A und B werden aus ihren Vorratsbehältern (im Beispiel der Figur 1: die Ziffern 1 und 2) jeweils getrennt zur Mischvorrichtung (im Beispiel: Ziffer 9) gefördert und dort intensiv vermischt.

Die Pumpen (im Beispiel der Figur 1: Ziffer 7 und 8) können dabei kontinuierlich (Zahnradpumpen) oder diskontinuierlich (Kolbenpumpen) wirken. Die Fördermenge jeder Pumpe pro Zeiteinheit ist über Motordrehzahl und Übersetzung variabel einstellbar. Damit lassen sich Mischungsverhältnis sowie die pro Zeiteinheit zur Auftragsvorrichtung geförderte Lackmenge genau festlegen. Die Einstellung wird derart vorgenommen, daß die Fördermenge dem Lackverbrauch an den Auftragsvorrichtungen entspricht.

Durch Änderung der Motorendrehzahl der Pumpen läßt sich das Mischungsverhältnis der Lackkomponenten A und B variieren und gegebenenfalls unterschiedlichen Anforderungen anpassen. Ein Wechsel der Vorratsbehälter der Komponenten A oder B erlaubt eine rasche Umstellung der Lackmischung auf eine neue Qualitätsvariante.

Bei Bedarf kann die Zufuhr der Komponenten A und B vor den Pumpen mittels Hähnen (im Beispiel die Figur 1: Ziffern 4 und 5) gesperrt und auf die Förderung von Spülverdünnung aus den separaten Behältern (im Beispiel: Ziffern 3 und 6) umgestellt werden. Dies ist z.B. bei Unterbrechung oder Beendigung des Lackiervorgangs erforderlich. Als Spülverdünnung werden in der Regel inerte, mit den Komponenten A und B verträgliche Lösungsmittel verwendet, wie sie z.B. vorstehend beschrieben sind.

Die Mischung der Komponenten in der Mischvorrichtung kann mechanisch oder statisch erfolgen. Bewährt haben sich z.B. handelsübliche statische Mischrohre, die durch Stromteilung und Radialmischung eine einwandfreie Homogenisierung bewirken.

Der Mischvorrichtung schließt sich ein Lackverteiler (im Beispiel der Figur 1: Ziffer 10) an. Der homogenisierte Lack wird hier für die Förderung zu den einzelnen Auftragsvorrichtungen aufgeteilt. Der Weg zwischen Mischvorrichtung und Auftragsvorrichtung wird dabei kurz gehalten.

Der Lackverteiler besteht bevorzugt aus einem kurzen Rohrstück, in das biegsame Kapillarrohre , z.B. aus Edelstahl, eingefügt sind. Die Verwendung von Kapillarrohren erlaubt eine flexible und gezielte Lackzuführung zu den Auftragsvorrichtungen.

Als Kapillaren, Kapillarrohre oder kapillarartige Bohrungen werden hier Rohre bzw. rohrähnliche Materialien, insbesondere Metallrohre, mit einem Innendurchmesser von 0,1 bis 2,0 mm bezeichnet. Der Innendurchmesser wird hierbei hauptsächlich von der Ausflußrate (etwa 0,2 bis 10 ml/min) und der Lackviskosität bestimmt. Die Länge der Rohre wird von den örtlichen Maschinenverhältnissen bestimmt; sie beträgt beispielsweise 1-100 cm. Den Kapillaren ähnliche Vorrichtungen können auch mit gebohrten Metall- oder Kunststoffkörpern realisiert werden. Der Effekt solcher Einrichtungen beruht darauf, daß damit relativ hohe Strömungsgeschwindigkeiten (1-100 cm/sec) für kleine Flüssigkeitsmengen erreicht werden. Damit kann gesichert werden, daß die gemischten Komponenten nicht im Fördersystem reagieren und damit ein Verstopfen vermieden werden kann. Die Anzahl der Kapillaren oder Bohrungen wird von der Anzahl der zu beschichtenden Drähte (Drahtdurchzüge) bestimmt.

Ein Beispiel für eine geeignete Vorrichtung arbeitet z.B. mit folgenden Kennwerten für die Kapillaren bzw. kapillarartigen Bohrungen:
- Innendurchmesser 0,05 cm
- Länge 40 cm
- Anzahl 7 Stück
- Ausflußrate 0,2 - 5 ml/min
- Strömungsgeschwindigkeit 1,7 - 42 cm/sec.

Die Länge der Kapillaren kann variabel und den Erfordernissen angepaßt sein. Unter der Bezeichnung "Lackverteiler und Kapillaren" wird z.B. auch ein Rohrstück verstanden, das mit engen, kapillarartigen Bohrungen versehen und direkt über der Auftragsvorrichtung bzw. den Auftragsvorrichtungen angebracht ist.

Zwischen Lackverteiler und Auftragsvorrichtung können zusätzlich mechanisch oder elektromagnetisch regulierbare Absperrventile angebracht werden, um den Lackzufluß genau dem Verbrauch jeder einzelnen Auftragsvorrichtung anzupassen. Weiterhin kann bei hochviskosen Lackmischungen die Viskosität mittels einer Heizvorrichtung für die Kapillarrohre gesenkt werden. Der geringe Leitungsdurchmesser erlaubt eine gute Wärmeübertragung.

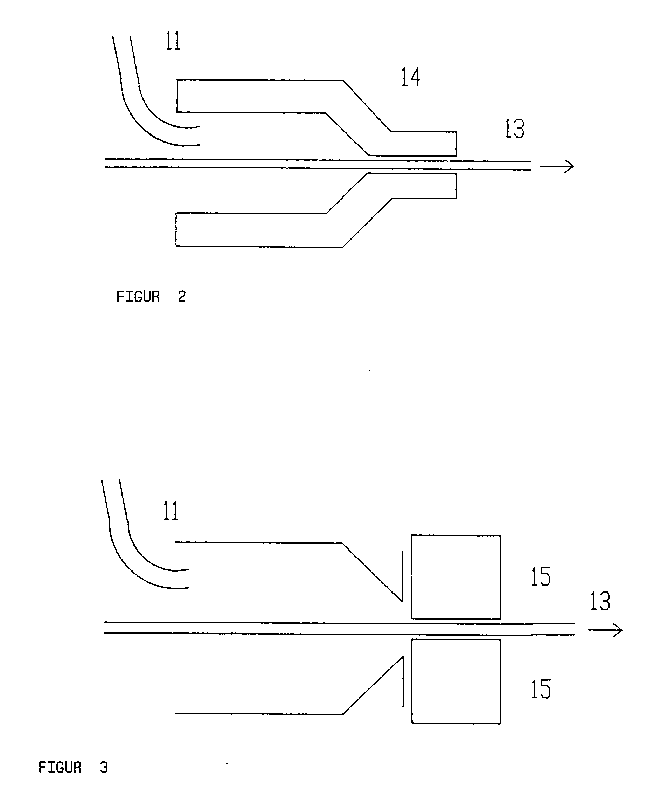

Mittels der Auftragsvorrichtung wird der Lack in einer genau definierten Menge zentrisch auf den Draht aufgetragen. Als Auftragsvorrichtung können z.B. die dem Stand der Technik entsprechenden Düsen- oder Filzabstreifer verwendet werden, (von denen Beispiele in den Figuren 2 und 3 dargestellt sind. In den Figuren 2 und 3 sind Beispiele für Auftragsvorrichtungen dargestellt, wie sie in der Figur 1, beispielsweise unter der Ziffer 12, genannt sind. In den Figuren 2 und 3 bedeuten 11 das Kapillarrohr, 13 den zu beschichtenden Draht bzw. die zu beschichtende Faser, 14 einen Düsenabstreifer und 15 einen Quetschfilz.). Bei der Verwendung von Quetschfilzen (z.B. Ziffer 15 in Figur 3) wird vor dem Durchzug durch den Filzabstreifer zweckmäßig ein konischer Trichter angebracht, der die geförderte Lackmenge aufnimmt.

In der Regel werden mehrere Auftragsvorrichtungen verwendet, um den isolierenden Lack in mehreren Schichten aufzutragen, bis die gewünschte Lackzunahme erreicht ist. Jede Lackschicht wird vor dem nächsten Auftrag in einem Trockenofen bei einer Temperatur von ca. 250 bis 500°C gehärtet. Der Einbrenngrad wird dabei durch Abziehgeschwindigkeit und Ofentemperatur geregelt.

Bei jedem Lackauftrag wird die Schichtstärke beispielsweise durch Düsenabstreifer (Figur 2) oder Quetschfilz (Figur 3) eingestellt. Der Lack wird bevorzugt über Kapillarrohre direkt in eine trichterförmige Öffnung an der Auftragsvorrichtung transportiert und zwar in einer Menge, die genau dem Verbrauch entspricht, so daß der Trichter stets gefüllt ist, jedoch nicht überläuft.
Der Lack kann auch vor der Auftragsvorrichtung direkt auf den Draht aufgeträufelt werden und wird dann von diesem weitertransportiert.

Bei Verwendung mehrerer Mischvorrichtungen und dabei unterschiedlichen Mischungsverhältnissen oder unterschiedlicher Zusammensetzung der Komponenten A und B lassen sich auch Mehrschichtaufbauten mit breitem Eigenschaftsspektrum erzeugen.

Durch das erfindungsgemäße Verfahren wird es möglich, Drähte in einfacher Weise mit gleichmäßigen Beschichtungen zu versehen, wobei die Abspaltung unerwünschter Nebenprodukte und die Emission von Lösungsmitteln ausgeschlossen und zumindest sehr gering gehalten werden kann. Die elektrisch leitfähigen Drähte können erfindungsgemäß mit Isolierschichten versehen werden, ohne daß die Lötfähigkeit darunter leidet.

Anhand der nachfolgenden Beispiele und Vergleichsversuche wird die Erfindung weiter erläutert. Teile (Tl) und Prozentangaben beziehen sich, sofern nicht anders angegeben, auf das Gewicht.

### Vergleichsversuch A

444 Tl Glycerin, 306 Tl Ethylenglykol, 672 Tl Dimethylterephthalat und 0,2 Tl Zinkacetat werden unter Stickstoff auf 200°C erhitzt; dabei destillieren 220 Tl Methanol über eine Kolonne ab. Anschließend werden 576 Tl Isophthalsäure bei 150°C zugesetzt. Die Temperatur wird nun in 3 Stunden auf 210°C gesteigert und dann gehalten, bis eine Säurezahl von 14 erreicht ist. Dabei destillieren 118 Teile Wasser ab. Das klare Harz besitzt eine Hydroxylzahl von 363. Das berechnete mittlere Molekulargewicht beträgt 513.

114 Tl Harz werden in 127 Tl Kresol gelöst und mit 460 Tl einer 50%igen Lösung eines handelsüblichen phenolverkappten Polyisocyanats für Polyurethandrahtlacke (Desmodur AP® stabil) in Kresol/Xylol = 2/l gemischt. Anschließend wird mit 186 Tl Solvesso 100®, 62 Tl Xylol und 50 Tl Isobutanol verdünnt. Der Lack besitzt eine Viskosität von 115 mPas bei einem Feststoffgehalt (1 h 180°C) von 30,8 %.

Der Lack wird mittels Düsen in 8 Durchzügen auf einen Kupferdraht von 0,355 mm Durchmesser aufgetragen und in einem Vertikalofen von 2,4 m Länge bei einer Umlufttemperatur von 450^{o}C gehärtet.

Als Reißgrenze wird diejenige Lackiergeschwindigkeit bezeichnet, bei der der Lack durch ungenügende Vernetzung bei ruckartigem Zerreißen nicht mehr auf dem Draht haftet. Sie beträgt 50 m/min. Die Prüfwerte sind in Tabelle 1 aufgeführt.

### Beispiel 1

### Herstellung der Komponente A:

1500 Teile des Polyesterharzes von Vergleichsversuch A werden bei 100^{o}C mit 120 Teilen Xylol, 185 Teilen Cyclohexanon und 550 Teilen Methoxypropylacetat versetzt. Der Feststoffgehalt (1h 180^{o}C) beträgt 60 % und die Viskosität 1720 mPas.

### Herstellung der Komponente B:

Als Polyisocyanatkomponente B wird die handelsübliche 67%ige Lösung eines Umsetzungsproduktes aus Trimethylolpropan und Toluylendiisocyanat verwendet (Desmodur L 67®).

Beide Komponenten werden für sich getrennt kontinuierlich über elektronisch geregelte Präzisions-Zahnrad-Dosierpumpen zu einem Mischblock mit statischem Mischrohr gefördert. Man erhält ein Lackmaterial mit einem Feststoffgehalt von 64 Gew.%. Der Weitertransport zu den Abstreifdüsen erfolgt über 7 Kapillarrohre mit je 40 cm Länge und 0,05 cm Innendurchmesser. Das Mischungsverhältnis (Gewichtsteile) von Komponente A zu Komponente B beträgt 0,92/l. Die Fördergeschwindigkeit der Lackmischung wird über die Pumpendrehzahl derart geregelt, daß keine Abtropfverluste entstehen. Sie beträgt je nach Abziehgeschwindigkeit des Drahtes insgesamt zwischen 6 und 10 g/min. Drahtdurchmesser und Ofeneinstellung entsprechen dem Vergleichsversuch A.

Die Verarbeitungsgeschwindigkeit ist gegenüber dem Vergleichsversuch A deutlich gesteigert. Die Prüfwerte sind in Tabelle 1 aufgeführt.

### Beispiel 2

Die Komponenten A und B von Beispiel 1 werden wie in Beispiel 1 beschrieben gemischt. Das Mischungsverhältnis von Komponente A zu Komponente B wird dabei auf 0,74/1 (Gewichtsteile) eingeregelt. Die Prüfwerte sind in Tabelle 1 aufgeführt.

### Beispiel 3

Die Komponenten A und B von Beispiel 1 werden wie in Beispiel 1 beschrieben gemischt. Das Mischungsverhältnis von Komponente A zu Komponente B wird dabei auf 0,55/1 (Gewichtsteile) eingeregelt. Die Prüfwerte sind in Tabelle 1 aufgeführt.

### Vergleichsversuch B

### Herstellung der Komponente A:

148 Teile Phthalsäureanhydrid und 130 Teile Ethylenglykol werden auf 200^{o}C erhitzt. Das abgespaltene Reaktionswasser destilliert dabei über eine Kolonne ab. Die Temperatur wird bei 200^{o}C gehalten, bis eine Säurezahl von 2 erreicht ist. Die Hydroxylzahl beträgt 470 mg KOH/g und das berechnete mittlere Molekulargewicht 235. Anschließend wird mit 85 Teilen Methoxypropylacetat verdünnt.

### Herstellung der Komponente B:

Als Polyisocyanatkomponente B wird eine Mischung aus 174 g (1 mol) Toluylendiisocyanat und 168 g (1 mol) Hexamethylendiisocyanat verwendet.

Beide Komponenten werden wie in Beispiel 1 beschrieben gemischt und auf den Draht aufgebracht. Das Mischungsverhältnis von Komponente A zu Komponente B beträgt 1,84/1 (Gewichtsteile).

Der lackierte Draht verklebt an den Umlenkrädern des Drahtlackierofens und reißt. Auch eine Variation von Lackiergeschwindigkeit und Ofentemperatur bewirkt keine Verbesserung.

### Vergleichsversuch C

Die Komponente A entspricht dem Vergleichsversuch B. Als Polyisocyanatkomponente B wird die handelsübliche 67%ige Lösung eines Umsetzungsproduktes aus Trimethylolpropan und Toluylendiisocyanat verwendet (Desmodur L 67®). Das Mischungsverhältnis von Komponente A zu Komponente B beträgt 0,48/1 (Gewichtsteile).

Der lackierte Draht klebt ebenso wie in Vergleichsbeispiel 2 an den Umlenkrädern des Lackierofens fest und reißt. Eine Variation von Lackiergeschwindigkeit und Ofentemperatur bewirkt ebenfalls keine Verbesserung.

### Beispiel 4

### Herstellung der Komponente A:

200 Teile Isophthalsäure, 46 Teile Glycerin, 67 Teile Trimethylolpropan und 124 Teile Ethylenglykol werden auf 210^{o}C erhitzt. Das abgespaltene Reaktionswasser destilliert dabei über eine Kolonne ab. Die Temperatur wird bei 210^{o}C gehalten, bis die Säurezahl auf 10 gesunken ist. Dann werden 118 Teile Phthalsäureanhydrid zugesetzt. Die Reaktionstemperatur wird nun bei 200^{o}C gehalten, bis eine Säurezahl von 2 erreicht ist. Nach dem Abkühlen auf 130^{o}C werden 50 Teile Xylol, 50 Teile Cyclohexanon und 120 Teile Methoxypropylacetat zugesetzt. Die Hydroxylzahl beträgt 340 und das berechnete Molekulargewicht 490, jeweils bezogen auf lösungsmittelfreies Harz. Nach dem Abkühlen auf 90^{o}C werden 20 g Trimellithsäureanhydrid zugesetzt. Die Temperatur wird nun 1 Stunde bei 90^{o}C gehalten. Die Hydroxylzahl beträgt danach 314 und die Säurezahl 24, jeweils auf lösungsmittelfreies Harz bezogen. Die Lösung besitzt einen Feststoffgehalt von 70 %.

### Herstellung der Komponente B:

Als Polyisocyanatkomponente B wird die handelsübliche 67%ige Lösung eines Umsetzungsproduktes aus Trimethylolpropan und Toluylendiisocyanat verwendet (Desmodur L 67®).

Beide Komponenten werden wie in Beispiel 1 beschrieben gemischt und auf den Draht aufgebracht. Das Mischungsverhältnis von Komponente A zu Komponente B beträgt 0,86/1 (Gewichtsteile). Die Prüfergebnisse sind in Tabelle 2 aufgeführt.

### Beispiel 5

Die Komponenten A und B von Beispiel 2 werden wie in Beispiel 1 beschrieben gemischt. Das Mischungsverhältnis von Komponente A zu Komponente B wird dabei auf 0,69/1 (Gewichtsteile) eingeregelt. Die Prüfwerte sind in Tabelle 2 aufgeführt.

### Beispiel 6

Die Komponenten A und B von Beispiel 1 werden wie in Beispiel 1 beschrieben gemischt. Das Mischungsverhältnis von Komponente A zu Komponente B wird dabei auf 0,57/1 (Gewichtsteile) eingeregelt. Die Prüfwerte sind in Tabelle 2 aufgeführt.

**TABELLE 1**

| | Vergleichsversuch A | | Beispiel 1 | | | Beispiel 2 | | | Beispiel 3 | | |
|---|---|---|---|---|---|---|---|---|---|---|---|
| Mishungsverhältnis Komponente A / B (Gewichtsteile) | | | 0,92/1 | | | 0,74/1 | | | 0,55/1 | | |
| Reißgrenge m/min | 50 | | 75 | | | 80 | | | 70 | | |
| Abziehgeschwindigkeit m/min | 40 | 45 | 45 | 55 | 65 | 50 | 60 | 70 | 40 | 50 | 60 |
| Durchmesserzunahme µm | 42 | 43 | 38 | 40 | 41 | 37 | 40 | 41 | 37 | 42 | 45 |
| Oberfläche Prüfwerte nach DIN 46453 | i0 | i0 | i0 | i0 | i0 | i0 | i0 | i0 | i0 | i0 | i0 |
| Haftung und Dehnbarkeit 20 % | i0 | i0 | i0 | i0 | i0 | i0 | i0 | i0 | i0 | i0 | i0 |
| Wärmeschock 30 min 180°C 1xd | ni0 | ni0 | ni0 | i0 | ni0 | ni0 | i0 | i0 | i0 | i0 | i0 |
| tanδ-Steilanstieg °C | 131 | 130 | 143 | 149 | 150 | 145 | 147 | 146 | 149 | 158 | 150 |
| Verzinnbarkeit bei 370 °C s | 3,0 | 3,0 | 2,8 | 2,8 | 2,8 | 2,6 | 2,6 | 2,8 | 3,0 | 2,0 | 1,5 |
| Erweichungstemperatur °C | 231 | 228 | 231 | 235 | 234 | 232 | 235 | 239 | 232 | 235 | 233 |
| Leiterdurchmesser 0,355 mm Ofentemperatur 450°C | | | | | | | | | | | |

**TABELLE 2**

| | Beispiel 4 | | | Beispiel 5 | | | Beispiel 6 | | |
|---|---|---|---|---|---|---|---|---|---|
| Mischungverhältnis Komponente A / B (Gew. Teile) | 0,86/1 | | | 0,69/1 | | | 0,57/1 | | |
| Reißgrenge m/min | 70 | | | 75 | | | 70 | | |
| Abziehgeschwindigkeit m/min | 45 | 55 | 65 | 45 | 55 | 65 | 45 | 55 | 65 |
| Durchmesserzunahme µm | 39 | 40 | 40 | 38 | 40 | 42 | 38 | 41 | 40 |
| Oberfläche - Prüfwerte nach DIN 46453 | i0 | i0 | i0 | i0 | i0 | i0 | i0 | i0 | i0 |
| Haftung und Dehnbarkeit 20% | i0 | i0 | i0 | i0 | i0 | i0 | i0 | i0 | i0 |
| Wärmeschock 30 min 180°C 1xd | ni0 | i0 | i0 | ni0 | i0 | i0 | ni0 | i0 | i0 |
| tan δ - Steilanstieg °C | 142 | 141 | 140 | 143 | 145 | 146 | 149 | 148 | 148 |
| Verzinnbarkeit bei 370°C s | 2,7 | 2,5 | 2,4 | 2,3 | 2,2 | 2,4 | 2,8 | 2,6 | 2,6 |
| Erweichungstemperatur °C | 227 | 230 | 229 | 239 | 237 | 233 | 242 | 239 | 239 |

## Patentansprüche

1. Verfahren zur Herstellung von lötfähigen isolierenden Überzügen auf elektrisch leitfähigen Drähten durch Beschichten mit flüssigen Mischungen aus hydroxylgruppenhaltigen Polymeren und Polyisocyanaten und anschließendes Aushärten, dadurch gekennzeichnet, daß man
A) ein oder mehrere hydroxylgruppenhaltige Polymere mit einem Zahlenmittel des Molekulargewichtes von 250 bis 1000, einer Hydroxylzahl von 130 bis 750 und einer Säurezahl von 0 bis 150. im flüssigen Zustand, mit
B) einem oder mehreren Polyisocyanaten mit mindestens zwei freien Isocyanatgruppen und einem Zahlenmittel des Molekulargewichts von 200 bis 2000, im flüssigen Zustand,
kontinuierlich unmittelbar vor dem Aufbringen auf den Draht in einem derartigen Verhältnis vermischt, daß auf jede Hydroxyl- und Carboxylgruppe 0,5 bis 1,5 Isocyanatgruppen entfallen, wobei die Komponenten A und/oder B Katalysatoren und/oder lackübliche Additive enthalten können, und daß man diese Mischung kontinuierlich jedem einzelnen in kontinuierlicher Fortbewegung befindlichen Draht in einer dem unmittelbaren Verbrauch entsprechenden Menge zuführt.

2. Verfahren nach Anspruch 1, dadurch gekennzeichnet, daß der lötfähige isolierende Überzug auf einem Kupferdraht hergestellt wird.

3. Verfahren nach einem der Ansprüche 1 oder 2, dadurch gekennzeichnet, daß der flüssige Zustand der Komponente A und/oder B durch Verwendung lösungsmittelfreier flüssiger Polymerer und lösungsmittelfreier flüssiger Polyisocyanate, durch Lösungsmittelzusatz bis zur Erzielung der gewünschten Applikationsviskosität und/oder durch Erwärmen erzielt wird.

4. Verfahren nach einem der Ansprüche 1 bis 3, dadurch gekennzeichnet, daß die Mischung jedem einzelnen Draht durch jeweils ein Kapillarrohr oder durch eine kapillarartige Bohrung zugeführt wird.

## Claims

1. Method for the production of solderable insulating coatings on electrically conductive wires by coating with liquid mixtures of hydroxyl-containing polymers and polyisocyanates and subsequent curing,
characterised in that
A) one or more polymers containing hydroxyl groups having a number average molecular weight of from 250 to 1000, a hydroxyl number of from 130 to 750 and an acid number of from 0 to 150, in the liquid state, together with
B) one or more polyisocyanates having at least two free isocyanate groups and a number average molecular weight of from 200 to 2000, in the liquid state,
are continuously mixed immediately prior to the application to the wire, in a ratio such that from 0.5 to 1.5 isocyanate groups are available to each hydroxyl and carbonyl group, wherein the components A and/or B may contain catalysts and/or conventional coating additives, and that this mixture is supplied continuously, in a quantity corresponding to the immediate consumption, to each individual wire in continuous forward motion.

2. Method according to claim 1, characterised in that the solderable insulating coating is produced on a copper wire.

3. Method according to one of claims 1 or 2,
characterised in that the liquid state of component A and/or B is obtained with the use of solvent-free liquid polymers and solvent-free liquid polyisocyanates, by adding solvent until the viscosity required for application is attained and/or by heating.

4. Method according to one or more of claims 1 to 3, characterised in that the mixture is supplied to each individual wire through a capillary tube or through a capillary-like bore respectively.

## Revendications

1. Procédé de préparation de revêtements isolants aptes au soudage sur des fils conducteurs de l'électricité par enduction avec des mélanges liquides de polymères contenant des groupes hydroxyles et de polyisocyanates et durcissement consécutif, caractérisé en ce que
On mélange continuellement, immédiatement avant l'application sur le fil
A) un ou plusieurs polymères contenant des groupes hydroxyles ayant une valeur moyenne de poids moléculaire de 250 à 1000, un indice d'hydroxyle de 130 à 750 et un indice d'acide de 0 à 150, à l'état liquide, avec
B) un ou plusieurs polyisocyanates possédant au moins deux groupes isocyanates libres et une valeur moyenne de poids moléculaire de 200 à 1000, à l'état liquide,
dans un rapport tel qu'à chaque groupe hydroxyle et carboxyle, revienne 0,5 à 1,5 groupes isocyanates, les composants A et/ou B pouvant contenir des catalyseurs et/ou des additifs habituels de laques et en ce qu'on achemine ce mélange en continu à chaque fil individuel qui se trouve en mouvement de défilement continu, en une quantité qui correspond à la consommation immédiate.

2. Procédé selon la revendication 1, caractérisé en ce que le revêtement isolant apte au soudage est réalisé sur un fil de cuivre.

3. Procédé selon une des revendications 1 et 2, caractérisé en ce que l'état liquide du composant A et/ou du composant B est obtenu par utilisation de polymères liquides sans solvant et de polyisocyanates liquides sans solvant, par addition de solvant jusqu'à obtenir la viscosité d'application désirée et/ou par chauffage.

4. Procédé selon une des revendications 1 à 3, caractérisé en ce que le mélange est acheminé à chaque fil individuel au moyen d'un tube capillaire ou à travers un perçage capillaire.
